# EUROPEAN PATENT APPLICATION

(11) **EP 1 468 886 A2**
(43) Date of publication of application: **20.10.2004**
(21) Application number: 04252194.8
(22) Date of filing: 15.04.2004
(51) Int. Cl.: B60S 1/24, F16C 7/06

(54) **Wiper mechanism**

(30) Priority: 18.04.2003 US 463730 P
(71) Applicant: JOHNSON ELECTRIC S.A., 2300 La Chaux-de-Fonds (CH)
(72) Inventor: Hultquist, Kevin Erik, Johnson Elect.Engin. Ltd., Hong Kong (CN); Parmelee, Michael W., Johnson Electric Engin. Ltd., Hong Kong (CN)
(74) Representative: Higgins, Michael Roger

(57) **Abstract**

A drive mechanism for a windshield wiper has wipe angle determined by the pivotable range of the pivot 16 which is driven by a motor 11 through gearbox 13, crank 15, connecting link 17 and a lever 18. The connecting link 17 has more than one connection possibility as does the lever. The drivers 19 which connect the connecting link 17 to the crank 15 and lever 18 are eccentrically mounted so that changes in the wipe angle of the pivot 16 can be effected by changing the orientation of the drivers 19 and/or the attachment points between the connecting link 17 and the lever 18 and crank 15.

## Description

Field and Background of the Invention This invention relates to windshield wipers and in particular, to a wiper mechanism for use in a single wiper unit.

One disadvantage of currently available wipers is that each wiper mechanism is set to give a single wipe angle, i.e., the angle that the wiper arm is moved. However, each application for the wiper is different and these differences generally require that the wiper arm be moved a different amount, i.e., have a different wipe angle. This currently means that the wiper linkage mechanism has to be redesigned for each application resulting in the manufacturer having to make and store a large range of linkage parts even though the basic wiper unit is the same.

Thus, there is a need for a linkage unit for a wiper mechanism which is flexible in assembly to enable different wipe angles to be achieved without using different parts. This can be achieved by varying the effective position of the drivers used to pivotally connect the linkage parts. The drivers are also known as ball joints and ball studs but are referred to herein as drivers.

### Summary of the Invention

Accordingly, the present invention provides a driver for pivotable connection of linkage in a wiper mechanism, the driver comprising: a body portion having a part spherical outer surface for mating with a bearing surface of a connecting linkage; a base portion for locating the body portion a predetermined distance from a lever to which the driver is mounted; and fixing means for fixing the driver to the lever, the fixing means allowing the driver to be orientated with respect to the lever whereby the effective length of the lever is varied by varying the orientation of the driver.

Preferably, the fixing means allows the driver to be fixed to the lever at a desired orientation, said orientation being determined by rotation of the body portion about a mounting axis which is parallel to but spaced from an axis of symmetry of the body portion.

Preferably, the fixing means includes a shank and a hole in the lever through which the shank extends.

Other optional and preferred features of the invention are set forth in the dependent claims.

### Brief Description of the Drawings

One preferred embodiment of the invention will now be described, by way of example only, with reference to the accompanying drawings in which:
Figure 1 is a perspective view of a drive mechanism for a windshield wiper;
Figure 2 is a part perspective part exploded view showing a part of the drive mechanism of Fig. 1 with an adapter;
Figure 3 is a view of a connecting link used in the drive mechanism of Fig. 1;
Figure 4 is a perspective view of the drive mechanism of Fig. 1 in a different configuration;
Figure 5 is a perspective view of the drive mechanism of Fig. 1 in another configuration;
Figure 6 is an elevational view of a pivot arm as used in the drive mechanism of Fig. 1;
Figure 7 is an exploded view of the pivot arm of Fig. 6;
Figure 8 is a sectional view of an eccentric driver;
Figure 9 is a plan view from below of the eccentric driver of Fig. 8;
Figure 10 is a sectional view of an alternative driver;
Figure 11 is a view similar to Figure 6 illustrating a further driver;
Figure 12 is a sectional view of the driver of Figure 11; and
Figures 13 to 15 are sectional views of further modified drivers.

### Detailed Description of the Preferred Embodiments

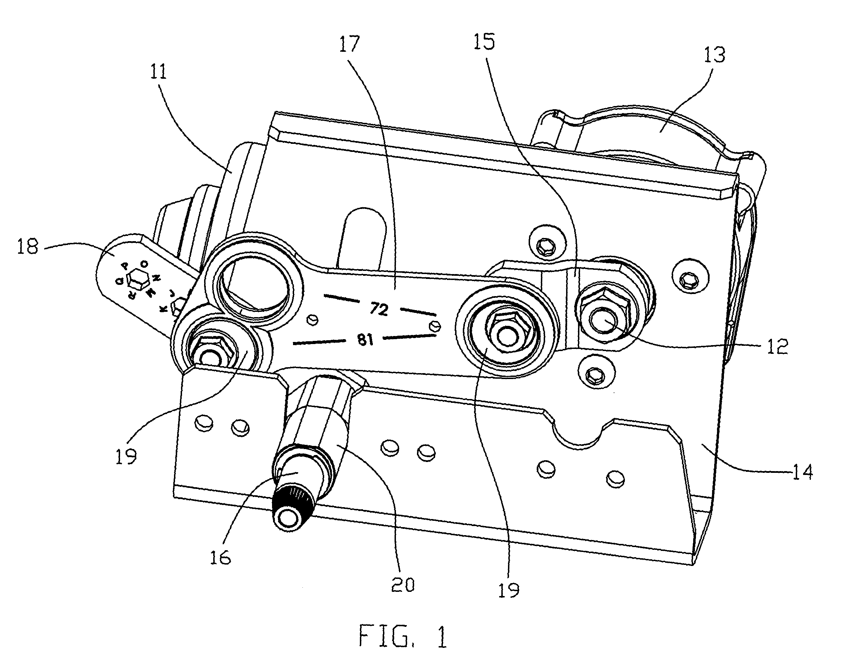

Figure 1 shows a drive mechanism 10 for a windshield wiper. The drive mechanism provides an oscillating pivot for driving or moving a wiper arm through a wipe angle, the predetermined angular range for wiping a windshield. The mechanism shown has a single pivot for driving a single wiper arm and therefore, is particularly suited for use in trucks and buses or other large vehicles with independent wipers or for use with rear windows.

The drive mechanism 10 comprises an electric motor 11 driving an output shaft 12 through a gearbox 13. The motor 11 and gearbox 13 are mounted on the back of a U-shaped bracket 14. An offset lever or crank 15 is fixed to the output shaft 12 for rotation therewith. The crank 15 drives a pivot 16 in an oscillating motion through a connecting link 17 and a lever 18. The effective lengths of the crank 15, link 17 and lever 18 determine the angular oscillations of the pivot 16. The connecting link 17 is pivotably connected to the crank 16 and lever 18 by drivers 19. The lever 18 is fixed to the pivot 16 for rotational movement therewith. The pivot 16 is supported by a bearing 20 which is mounted to the U-shaped bracket 14 which is used to mount the wiper mechanism to a vehicle for use therewith.

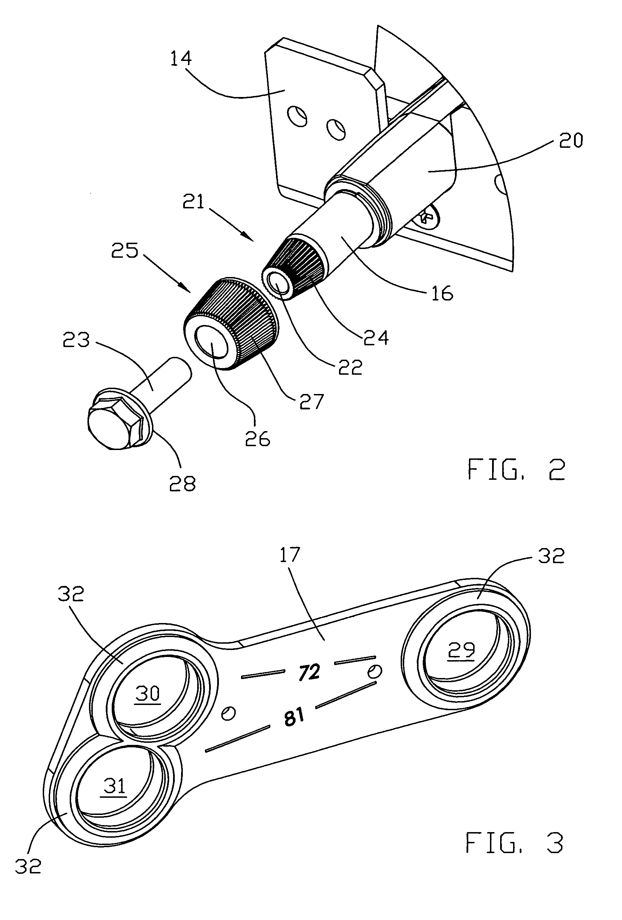

As shown in Figure 2, the pivot 16 has a distal end 21 remote from the lever 18 to which the wiper arm is connected. The distal end 21 of the pivot has an internally threaded axial hole 22 for receiving a screw 23 for fixing the wiper arm thereto. The outer surface of the distal end 21 has a tapered knurled portion 24 forming a coupling surface dimensioned to mate with a DIN style mounting socket of a wiper arm.

A ferrule 25 is provided for optional use to connect the pivot to a US style mounting socket of a wiper arm. The ferrule 25 has a through hole 26 with a tapered knurled inner surface (not shown) arranged to mate with the DIN style tapered knurled portion 24 of the pivot 16. The outer surface 27 of the ferrule 25 is tapered and knurled according to US style wiper requirements. In use, the ferrule 25 is placed on the tapered portion 24 of the pivot 16 with the knurls meshed and a wiper arm with a US style mounting socket is placed onto the ferrule and the screw 23 placed through a hole in the wiper arm mount and the ferrule hole 26 and threadedly engages the hole 22 in the pivot 16. The screw 23 is tightened so that a flange 28 on the head of the screw bears down on the wiper arm mount and maintains the wiper arm fixedly secured to the pivot via the ferrule.

Wiper arms with DIN style mounting sockets are fitted in a similar way directly to the tapered knurled portion 24 of the pivot 16 without the use of the ferrule 25. Use of the ferrule negates the need to manufacture and maintain separate wiper mechanisms for DIN style and US style wiper arms, thereby reducing inventory.

Referring now to Fig. 3, the connecting link 17 is a generally elongated plate having a hole 29 at one end and two holes 30, 31 at the other end. Each hole has a plastic lining or grommet 32 providing a bearing interface between the connecting link 17 and the pivotable connection or driver 19 used to connect the connecting link 17 to the crank 15 and pivot lever 18. The distance between holes 29 and 30 is less than the distance between the holes 29 and 31. The grommets 32 may be molded directly to the link 17 in which case the grommets 32 for holes 30 and 31 may be integrally formed or joined together.

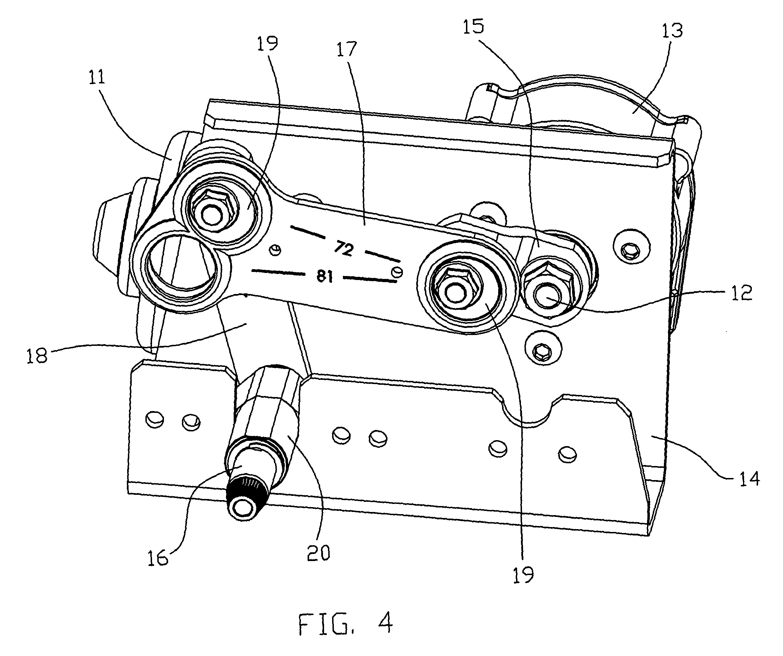

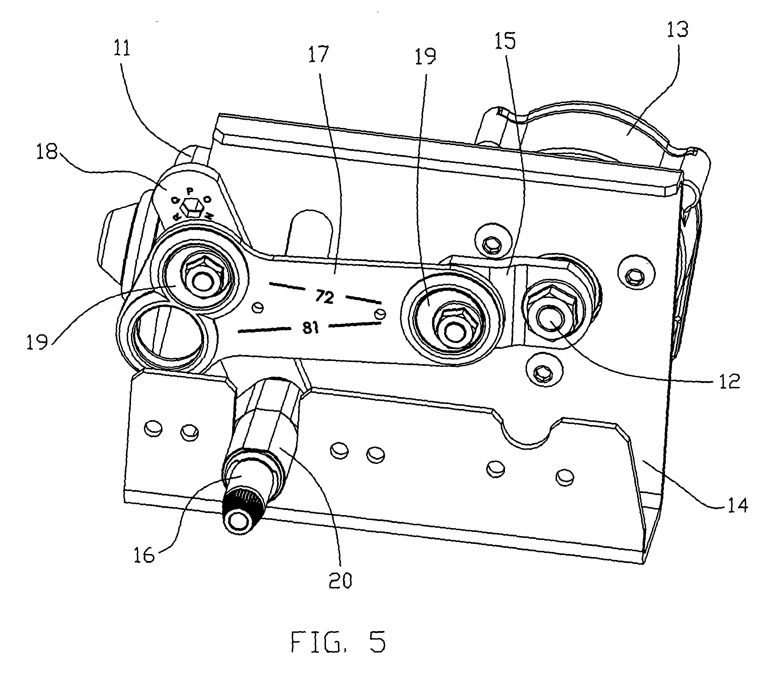

As shown in the assembly figures (Figures 1, 4 and 5), the end of the connecting link with a single hole or first hole 29 is connected to the crank 15 via a first driver 19. The other end of the connecting link 17 is connected to the pivot 16 via a second driver 19 attached to the lever 18 and coupled to one of the two available holes 30, 31 of the link.

The second and third holes 30, 31 are formed or located at predetermined distances from the first hole 29 such that the first and second predetermined distances are not equal. In this embodiment, the first distance, the distance between the first hole 29 and the second hole 30 is 72 mm while the second predetermined distance, the distance between the first hole 29 and the third hole 31, is 81 mm, center to center. Coupling the driver 19 on the lever 18 to the second hole 30 or the third hole 31 changes the effective or operational length of the connecting link 17 which in turn changes the wipe angle, i.e., the angular distance that one turn of the crank 15 will cause the pivot 16 to move.

Thus, this one connecting link 17 now can provide the function of two separate connecting links. While a connecting link with three holes can provide two desired wipe angles, connecting links with more than three holes are possible, such as four holes (two at each end) (four separate distances) or three holes at one end and one hole at the other end (three separate distances) could be used.

To increase the number of separate wipe angles, the pivot lever 18 is provided with a number of holes 33 for mounting of the driver 19. In the preferred embodiment as illustrated, the lever 18 has three separate driver mounting holes 33, each giving a different effective lever length (from pivot to driver), thus giving a different range of movement of the pivot when use with the second hole 30 or third hole 31 of the connecting link 17. Thus, three different effective lever lengths with two different effective connecting link lengths give six different wipe angles. For example, these six wipe angles could be, say, 100°, 85°, 70°, 60°, 50°, 40°.

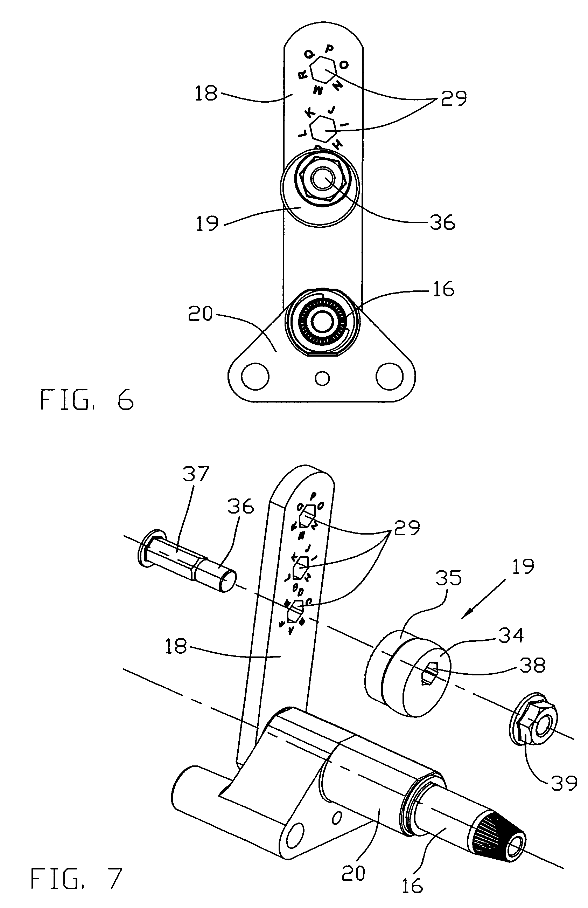

As the drivers 19 are identical, only the driver connected to the pivot lever will be described in detail with reference to Figures 6 and 7. The driver 19 has a part spherical portion 34 which mates with the plastic liner 32 of the connecting link 17 and a base portion 35 which spaces the spherical portion 34 away from the lever 18. The holes 29 in the lever 18 are hexagonal and receive a screw 36 with a hexagonal shank 37. The driver 19 also has a hexagonal hole 38 for receiving the screw 36. A nut 39 is threaded on the end of the screw 36 to fix the driver 19 to the lever 18.

To give even more variations to the effective lever length and crank length, the driver may have an offset or eccentricism as illustrated by the eccentric drivers of the preferred embodiments where the hole through the driver is offset from the central axis of the part spherical portion 34. As the shank 37 of the screw 36 is hexagonal and the mounting hole 38 in the driver 19 is also hexagonal, the driver 19 can be positioned in one of six different orientations. By careful selection of the offset direction and the orientation of the hexagonal mounting holes 29 in the lever 18, these six different orientations can give up to six different effective lever lengths or throws (distance from pivot center to driver center).

Thus the throw will be varied depending on driver orientation and the amount of offset. With six possible positions on the lever driver and six positions on the crank driver giving 36 driver positions and with three lever lengths and two connecting link lengths as illustrated, a total of 216 different combinations are possible affecting the wipe angle of the pivot. However, some combinations may result in duplicate wipe angles. Even so, a typical combination may give 54 unique wipe angles ranging from 41° to 108°.

Even with symmetrical alignment of the hexagonal mounting holes 29 and driver offset giving only three unique distance changes per driver, this still gives a large range of available wipe angles for vehicle manufacturers to select for their particular application from a single wiper mechanism. Thus this gives greater choice and freedom of design while reducing inventory.

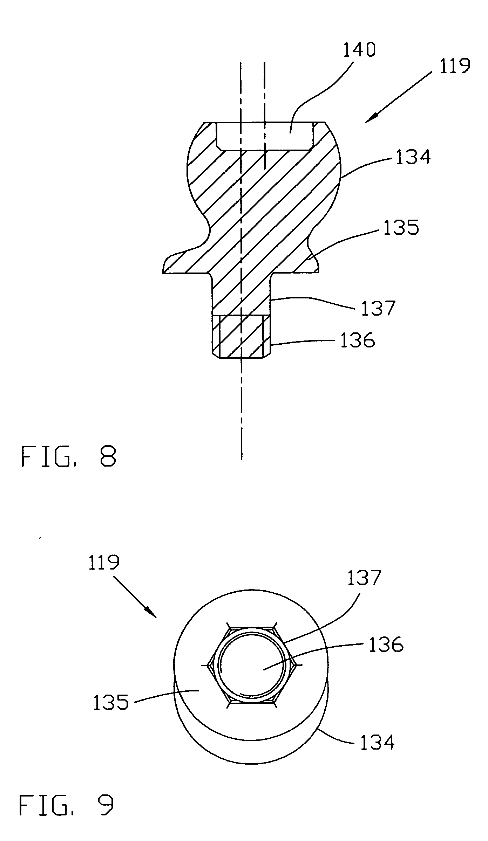

Various alternative driver forms will now be described, with reference to Figures 8 to 15.

Figures 8 and 9 illustrate an alternative offset or eccentric driver where the mounting hole and screw are replaced by an driver 119 with an integral shaft 136 which projects from the base portion 135 for mounting to the lever or crank. The shaft 136 engages a nut (not shown) to secure the driver 119 to the lever or crank and the shaft 136 has a hexagonal shank 137 for keying the driver 119 to the hexagonal holes in the lever or crank.

A recess 140 is formed on the top of the driver 119 to form a reservoir for grease to lubricate the coupling.

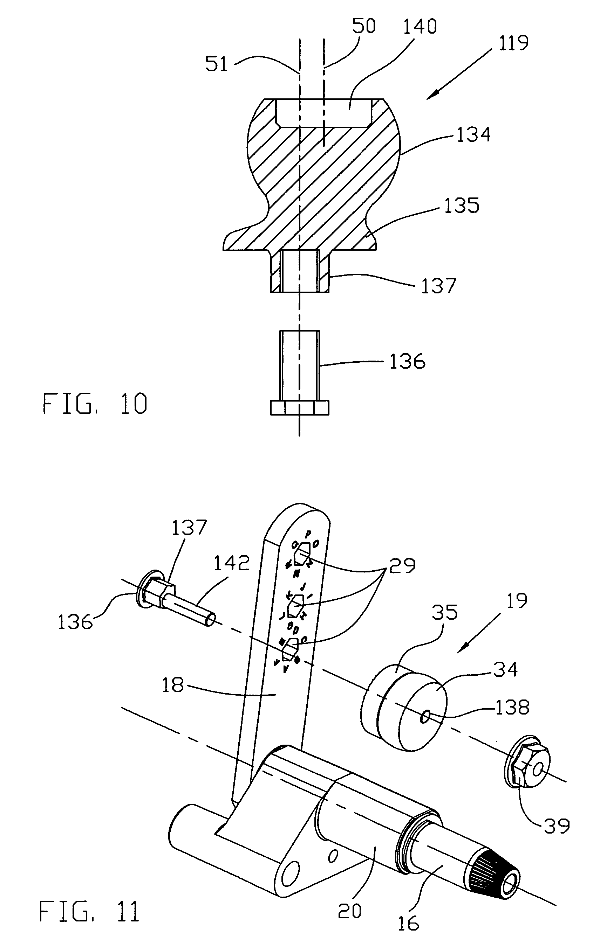

Figure 10 shows a driver similar to the driver of Figures 8 and 9 except that the shank 137 has an internally threaded hole 141 and a separate screw 136 nips the driver 119 to the lever.

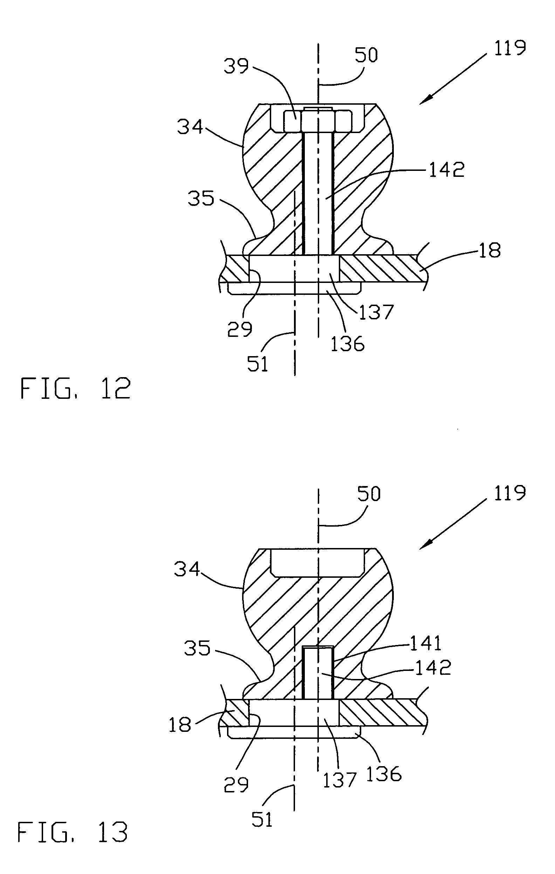

Figures 11 and 12 illustrate a driver 119 having a coaxial mounting hole 138 which receives a shaft portion of fixing screw 136. A nut 39 is screwed onto the shaft to fix the driver to the lever. The mounting screw has an integral shank 127 which mates in various orientations with the hole 29 in the lever 18 and the axis of the threaded screw portion is offset, i.e., non-coaxial with the axis of the shank portion. Thus, different orientations of this offset mounting screw in the mounting hole of the lever produce variations in the mounting position of the body portion of the driver.

Figure 13 illustrates a variation on the driver of Figure 12 in that the mounting screw 136 is screwed directly onto the base portion 35 of the driver 119. Thus, instead of a through hole, there is an internally threaded mounting hole 141 which is coaxial with an axis of symmetry 50 of the body portion. The mounting axis 51 which is the axis of the shank 137 is laterally offset.

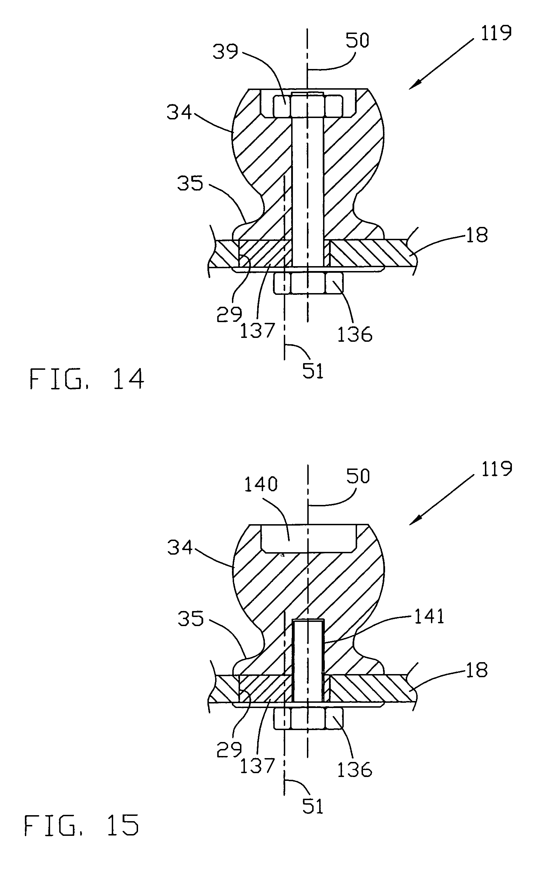

Figure 14 illustrates a further variation over Figure 12 in that the shank 137 is a separate item from the screw and base portion. The shank 137 has a through hole for receiving a mounting screw 136 and is able to be fixed or keyed to the hole 29 in the lever 18 at a number of orientations. As the hole in the shank is not co-axial with the mounting axis of the shank, as the shank is rotated with respect to the lever, the position of the hole rotates about the mounting axis, causing an offset effect in the location of the driver which is secured to the lever by the screw 136 passing through a through hole in the driver which is coaxial with the axis of symmetry 50 of the body portion 34 and a nut 79 nips the driver to the lever 18.

Figure 15 is similar to the driver arrangement of Figure 14 with the nut 39 being replaced by an internally threaded hole 141 coaxial with the axis of symmetry 50. Of course, the screw could be replaced by a screw shaft integral with the base or body portions passing through the shank and engaging a nut to nip the driver to the lever.

The embodiment described above is given by way of example only and various modifications will be apparent to persons skilled in the art without departing from the scope of the invention as defined in the appended claims.

For example, it may not be necessary for an acceptable wiper model to include all of the features of the preferred embodiment such as the extra hole in the connecting link and in the lever or maybe to provide extra holes in the crank instead.

Also, the driver or its mounting screw may have a shank which is not hexagonal in cross section, e.g. square giving up to four offset lengths or triangular giving up to only three offset lengths, etc.

## Claims

1. A driver for pivotable connection of linkage in a wiper mechanism, the driver (19) comprising:
a body portion (34) having a part spherical outer surface for mating with a bearing surface of a connecting linkage;
a base portion (35) for locating the body portion (34) a predetermined distance from a lever (18) to which the driver (19) is mounted; and
fixing means (36, 39) for fixing the driver (19) to the lever (18),
**characterised in that**
the fixing means allowing the driver (19) to be orientated with respect to the lever (18) whereby the effective length of the lever (18) is varied by varying the orientation of the driver (19).

2. The driver of claim 1 wherein the fixing means allows the driver (19) to be fixed to the lever at a desired orientation, said orientation being determined by rotation of the body portion about a mounting axis which is parallel to but spaced from an axis of symmetry of the body portion.

3. The driver of claim 2 wherein the fixing means includes a shank (37, 137) and a hole (33) in the lever (18) through which the shank (37) extends.

4. The driver of claim 3 wherein the hole (33) is non-circular and the shank (37) is non-circular and keyed to the hole (33).

5. The driver of claim 4 wherein the shank (137) is integral with the base portion (135) and non-coaxial with an axis of symmetry of the body portion (134).

6. The driver of claim 5 wherein the shank (137) has a threaded distal end (136) and the fixing means includes a nut (39) screwed onto the threaded distal end of the shank to fix the driver (19) to the lever (18).

7. The driver of claim 5 wherein the shank (137) has an axially extending internally threaded hole (141) and the fixing means further includes a screw (136) threadedly engaged with the threaded hole (141) in the shank (137) to nip the driver (19) to the lever (18).

8. The driver of claim 3 wherein the shank (37, 137) has a multi-sided geometric cross section.

9. The driver of claim 3 wherein the shank (37, 137) is hexagonal.

10. The driver of claim 3 wherein the hole (33) has a multi-sided geometric cross section.

11. The driver of claim 3 wherein the hole (33) has the same geometric cross section as the shank (37, 137).

12. The driver of claim 3 wherein the shank (37) is a part of a shaft of a screw (36), the shaft having a threaded free end; wherein the body portion (34) has a through hole (38) coaxial with the mounting axis and shaped to key with the shank (37) in a number of orientations and wherein a nut (39) is screwed onto the threaded free end of the shaft to nip the driver (19) to the lever (18).

13. The driver of claim 3 wherein the fixing means includes a screw (136) and the shank (137) is a part of a shaft of the screw (136), the screw (136) has a threaded free end (142) having an axis (50) which is offset from an axis of the shank(51), the screw (136) being threadedly engaged with an internally threaded hole (141) in the base portion (135), said hole being coaxial with the axis of symmetry of the body portion (34).

14. The driver of claim 3 wherein the fixing means includes a,screw (136) and the shank (137) is a part of a shaft of the screw (136), the screw (136) has a threaded free end (142) which is non-coaxial with the shank (137), the screw (136) passing through a hole in the body portion (34), said hole being coaxial with the axis of symmetry (50) of the body portion (34), and a nut (39) engaging the screw (136) nips the driver (19) to the lever (18).

15. The driver of claim 3 wherein the fixing means includes a screw (136) threadedly engaged with a hole (141) in the base portion (35), said hole (141) being coaxial with the axis of symmetry (50) of the body portion (34), and the shank (137) is a separate spacer having an offset through hole accommodating the screw (136).

16. The driver of claim 3 wherein the fixing means includes a screw passing through a hole in the base portion (35), said hole being coaxial with the axis of symmetry (50) of the body portion (34), and the shank (137) is a separate spacer having an offset through hole accommodating the screw (136).

17. The driver of claim 1 when used in a wiper mechanism having a pivot lever (18) having more than one hole (33) for mounting the driver (19).
